# EUROPEAN PATENT APPLICATION

(11) **EP 2 911 097 A1**
(43) Date of publication of application: **26.08.2015**
(21) Application number: 14290039.8
(22) Date of filing: 19.02.2014
(51) Int. Cl.: G06Q 10/02, G07C 9/00

(54) **Open ticketless travel services**

(71) Applicant: Amadeus S.A.A., 06410 Biot (FR)
(72) Inventor: Dubuc, Simon, 06600 Antibes (FR)
(74) Representative: Samson & Partner Patentanwälte mbB

(57) **Abstract**

Methods, systems, and computer program products for associating a traveler with an electronic ticket reserving a travel related service. During a booking process, the traveler may be asked to provide an identification image. The identification image provided by the traveler may be associated with the electronic ticket in an electronic ticket database. At a point-of-service, the traveler may present an image that is captured by a control system. The control system may compare the captured image to the identification image and determine if the images match. In response to the images matching, the control system may provide an indication that the traveler should receive the travel service reserved by the electronic ticket.

## Description

### TECHNICAL FIELD

The invention generally relates to computers and computer software, and in particular to methods, systems, and computer program products for travel planning, reservations, and ticketing.

### BACKGROUND

Travelers on common carriers, such as railways and airlines, typically reserve seats for travel by purchasing tickets. Historically, tickets have been printed on paper and presented to the carrier by the traveler upon boarding. Paper tickets thereby formed a type of currency that entitled the ticket holder to board the carrier and receive services identified by the ticket. Paper tickets also provided the carrier with proof that the holder paid for the travel service. The traveler would typically purchase the ticket through a ticket office of the carrier or through a travel agent, who would issue the paper ticket to the traveler. For travel involving multiple legs or segments, tickets would sometimes be provided in the form of a booklet containing several separate tickets or coupons, with one coupon being redeemable for each leg of the trip. Typically, a portion of the paper ticket would be surrendered to the carrier at the time of departure or boarding, with the traveler keeping another portion of the ticket as proof that they were authorized to receive the service.

Electronic tickets have largely replaced paper tickets in the travel industry. An electronic ticket comprises a digital file located in a database of a computer system, such as a Computer Reservation System (CRS) or a Global Distribution System (GDS). The carrier can determine if the traveler is entitled services by accessing the digital file, which provides an electronic record of the traveler's reservation. The digital file stores information relating to the reserved travel service, such as dates and times when services are to be rendered, origin and destination locations, seat assignment, travel class, the identity of the ticket holder, and the current status of the electronic ticket.

In order for the traveler to receive the services reserved by the electronic ticket, the traveler must typically present some form of identification to the service provider. Thus, although electronic tickets may eliminate the need for a paper ticket, the traveler must still carry some form of identification so that the service provider can determine that the traveler is authorized to receive the service identified by the electronic ticket. This has led to confusion among travelers, who may be required to provide different forms of identification depending on the carrier and the geographic region in which the carrier is operating. In addition, many forms of identification include one or more printable documents, which may be easily counterfeited or otherwise copied, thereby creating a security issue.

Thus, improved systems, methods, and computer program products are needed for reserving, issuing, and authenticating electronic tickets in the travel industry, and to provide convenient and secure identification of ticket holders.

### SUMMARY

In an embodiment of the invention, a method of associating a traveler with a reservation for a travel service is provided. The method includes receiving a request to reserve the travel service and generating a reservation record for the travel service in a database. The method further includes receiving a traveler-defined first image, and associating the first image with the reservation record in the database.

In another embodiment of the invention, a method of authorizing use of the reservation for the travel service by the traveler is provided. The method includes receiving a second image presented by the traveler. The method further includes comparing the second image to the first image associated with the reservation for the travel service, and in response to the second image matching the first image, authorizing the traveler to use the reservation.

In another embodiment of the invention, an apparatus for associating the traveler with the reservation for the travel service is provided. The apparatus includes one or more processors, and a memory including instructions that, when executed by the one or more processors, cause the apparatus to receive the request to reserve the travel service and generate the reservation record for the travel service in the database. The instructions may further cause the apparatus to receive the traveler-defined first image and associate the first image with the reservation record in the database.

In another embodiment of the invention, an apparatus for authorizing use of the reservation for the travel service by the traveler is provided. The apparatus includes one or more processors, and a memory including instructions that, when executed by the one or more processors, cause the apparatus to receive the second image presented by the traveler and compare the second image to the first image associated with the reservation for the travel service. The instructions may further cause the apparatus to authorize the traveler to use the reservation in response to the second image matching the first image.

In another embodiment of the invention, a computer program product is provided that includes a non-transitory computer readable storage medium including instructions. The instructions may be configured, when executed by the processor, to cause the processor to receive the request to reserve the travel service and generate the reservation record for the travel service in the database. The instructions may further cause the apparatus to receive the traveler-defined first image and associate the first image with the reservation record in the database.

In another embodiment of the invention, the computer program product includes instructions configured to cause the processor to receive the second image presented by the traveler and compare the second image to the first image associated with the reservation for the travel service. The instructions may further cause the processor to authorize the traveler to use the reservation in response to the second image matching the first image.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including a plurality of computer systems in communication via a network.
FIG. 2 is a diagrammatic view of an exemplary computer system of FIG. 1.
FIG. 3 is a flow chart depicting a process that may be executed by one or more of the computer systems in FIG. 1 that includes associating an identification image with an electronic ticket in a database.
FIG. 4 is a flow chart depicting a process for authorizing delivery of a service identified by the electronic ticket by comparing a presented image to the identification image.

### DETAILED DESCRIPTION

Embodiments of the invention may be implemented by a computing system, such as a Global Distribution System (GDS). The computing system may provide processing and database functions that facilitate interconnections between indirect sellers of tickets and a plurality of computer reservation systems each associated with a carrier or other travel service provider. The computing system may be configured to allow travelers to book tickets for travel, hotel rooms, vehicles, or any other travel products and services (referred to herein as simply "services") through direct and indirect sales channels. The indirect sales channels may include online or traditional travel agencies or other business entities selling the services provided by the travel service provider.

In an embodiment of the invention, the traveler may be provided with an option of obtaining "open ticketless" services by providing an identification image during a booking process. In response to receiving the identification image from the traveler, the system may associate the identification image with an electronic ticket in a database. At the time and place where the service is to be provided, or the "point-of-service", the traveler may be asked to present an image. The presented image may be captured by the computing system and compared to the identification image in the database. If the images match, the computer system may authorize delivery of the service. If the images do not match, the traveler may be denied the service, or asked to provide some other type of proof that they are entitled to receive the service.

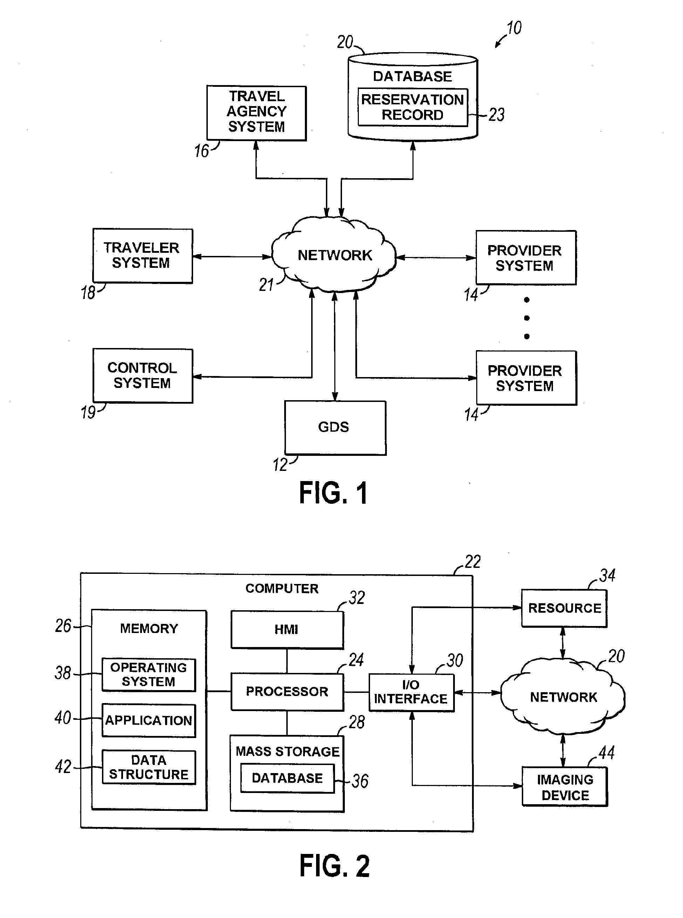

Referring now to FIG. 1, an operating environment 10 in accordance with an embodiment of the invention may include the Global Distribution System (GDS) 12, one or more provider systems 14, a travel agency system 16 comprising a representative indirect seller system, a traveler system 18, a control system 19, and an electronic ticket database 20. Each of the GDS 12, provider systems 14, travel agency system 16, traveler system 18, control system 19, and electronic ticket database may communicate through a network 21. The network 21 may include one or more private and/or public networks (e.g., the Internet) that enable the exchange of data.

The GDS 12 may be configured to facilitate communication between the provider systems 14 and travel agency system 16 by enabling travel agents, on-line travel agencies and other indirect sellers to book reservations on one or more provider systems 14 via the GDS 12. To this end, the GDS 12 may maintain links to each of the provider systems 14 via the network 21. These links may allow the GDS 12 to route reservation requests from the travel agency system 16 to the corresponding provider system 14. The travel agency system 16 may thereby book services from multiple service providers via a single connection to the GDS 12. In response to a ticket being booked, the GDS 12 may receive and store a Passenger Name Record (PNR). The PNR may be generated, at least in part, by the provider systems 14, and may comprise one or more reservation records that contain itinerary and traveler information associated with one or more booked reservations. The PNR may be stored in a PNR database accessible to the GDS 12, and may include data defining an itinerary for a particular trip, passenger, or group of passengers. The defined itinerary may include segments from multiple carriers (e.g., flights, bus, and or rail segments), hotel reservations, rental car reservations, or any other travel related services.

The GDS 12 may access the electronic ticket database 20 to store and retrieve data relating to electronic tickets. The electronic ticket database 20 may comprise the PNR database, or may be maintained as a separate database. Each electronic ticket may comprise one or more electronic coupons stored in the electronic ticket database 20, with each coupon corresponding to a travel segment or service provided by the electronic ticket. The electronic ticket database 20 may store the electronic ticket as one or more reservation records 23. These reservation records 23 may include or be associated with one or more images in the electronic ticket database 20, and may comprise at least a portion of a Total Travel Record (TTR). The Total Travel Record may include traditional PNR elements as well as non-GDS elements. In response to one or more of the electronic coupons being used, exchanged, or refunded, the GDS 12 may update the electronic ticket database 20 to reflect a change in status of the electronic ticket.

Each provider system 14 may include a Computer Reservation System (CRS) for the respective travel service provider. Each Computer Reservation System may include a database for storing and retrieving data related to reserving travel services, tracking service provider inventory, and issuing electronic tickets for the reserved travel services. The provider systems 14 may thereby enable the GDS 12 and/or travel agency system 16 to reserve and pay for services.

The travel agency system 16 may be configured to book travel through the GDS 12. To this end, the travel agency system 16 may include one or more applications that allow the travel agent access the GDS 12. The travel agency system may also include one or more web server applications that allow the traveler to book travel using a web browser or other application running on the traveler system 18. The traveler system 18 may comprise any suitable computing device that enables the traveler to access the travel agency system 16. Exemplary computing devices may include, but are not limited to a desktop computer, laptop computer, tablet computer, personal digital assistant, or smart phone.

The control system 19 may provide employees of the travel service provider with information at the point-of-service so that the employees can make informed decisions on whether to provide services to the traveler. For example, the control system 19 may include a computer system or application configured to perform traveler check-in and boarding at a departure point, such as a railway station or airport. In the case of lodging or other rentals, the control system 19 may be configured to confirm or deny reservations for hotel rooms, rental cars, or any other services. The control system 19 is therefore not limited to controlling the delivery of any particular type of service.

In response to receiving data indicating that the traveler has checked-in at the departure point, boarded the conveyance, or received some other service, the control system may transmit data to GDS 12 indicating the change in status of the electronic ticket. The GDS 12 may then update the electronic ticket database to reflect this change. The control system 19 may also receive data from the GDS 12 indicating whether the electronic ticket is valid, and whether the traveler is authorized to use the electronic ticket. Each departure point may implement a control system 19 so that carrier agents can perform check-in and boarding of their passengers, or otherwise verify that the traveler has purchased the services being provided.

Referring now to FIG. 2, the GDS 12, provider systems 14, travel agency system 16, traveler system 18, and control system 19 of operating environment 10 may be implemented on one or more computer devices or systems, such as exemplary computer system 22. The computer system 22 may include at least one processor 24, a memory 26, a mass storage memory device 28, an input/output (I/O) interface 30, and a Human Machine Interface (HMI) 32. The computer system 22 may also be operatively coupled to one or more external resources 34 and/or scanning or imaging devices 44 via the network 21 and/or I/O interface 30.

The processor 24 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 26. Memory 26 may include a single memory device or a plurality of memory devices including but not limited to read-only memory (ROM), random access memory (RAM), volatile memory, non-volatile memory, static random access memory (SRAM), dynamic random access memory (DRAM), flash memory, cache memory, or any other device capable of storing information. The mass storage memory device 28 may include data storage devices such as a hard drive, optical drive, tape drive, non-volatile solid state device, or any other device capable of storing information.

A database 36 (e.g., the electronic ticket database 20) may reside on the mass storage memory device 28, and may be used to collect and organize data used by the various systems and modules described herein. The database 36 may include data and supporting data structures that store and organize the data. In particular, the database 36 may be arranged with any database organization and/or structure including, but not limited to, a relational database, a hierarchical database, a network database, and/or combinations thereof. A database management system in the form of a computer software application executing as instructions on the processing 24 may be used to access the information or data stored in records of the database 36 in response to a query, where a query may be dynamically determined and executed by the operating system 38, other applications 40, and/or one or more modules.

Processor 24 may operate under the control of an operating system 38 that resides in memory 26. The operating system 38 may manage computer resources so that computer program code embodied as one or more computer software applications, such as application 40 residing in memory 26, may have instructions executed by the processor 24. In an alternative embodiment, the processor 24 may execute the application 40 directly, in which case the operating system 38 may be omitted. One or more data structures 42 may also reside in memory 26, and may be used by the processor 24, operating system 38, and/or application 40 to store or manipulate data.

The I/O interface 30 may provide a machine interface that operatively couples the processor 24 to other devices and systems, such as the network 21, external resource 34, and/or imaging device 44. The application 40 may thereby work cooperatively with the network 21, external resource 34, and/or imaging device 44 by communicating via the I/O interface 30 to provide the various features, functions, and/or modules comprising embodiments of the invention. The application 40 may also have program code that is executed by one or more external resources 34, or otherwise rely on functions and/or signals provided by other system or network components external to the computer system 22. Indeed, given the nearly endless hardware and software configurations possible, persons having ordinary skill in the art will understand that embodiments of the invention may include applications that are located externally to the computer system 22, distributed among multiple computers or other external resources 34, or provided by computing resources (hardware and software) that are provided as a service over the network 21, such as a cloud computing service.

The HMI 32 may be operatively coupled to the processor 24 of computer system 22 in a known manner to allow a user to interact directly with the computer system 22. The HMI 32 may include video and/or alphanumeric displays, a touch screen, a speaker, and any other suitable audio and visual indicators capable of providing information to the user. The HMI 32 may also include input devices and controls such as an alphanumeric keyboard, a pointing device, keypads, pushbuttons, control knobs, microphones, etc., capable of accepting commands or input from the user and transmitting the entered input to the processor 24. The HMI 32 may also include the imaging device 44 so that the imaging device 44 is integral with the computer system 22. For example, the computer system 22 may comprise a smart phone or other portable computing device that includes a built-in digital camera which provides the imaging device 44.

Purchasing the electronic ticket may involve pricing, booking, and ticketing. In response to receiving a request from the traveler system 18, the travel agency system 16 may price the electronic ticket with the help of the fare engine residing in the GDS 12. The fare engine may determine a total fare for the ticket by calculating a fare for each of one or more segments that satisfy an itinerary of the electronic ticket, and summing these fares to generate the total fare. The resulting electronic ticket may be comprised of one or more electronic coupons, each corresponding to one of the segments or services of the trip. The itinerary of the ticket may define the segments for which the electronic ticket can be used to obtain a boarding pass, and/or other services that comprise the trip. Each segment defined by the itinerary may comprise one or more sequential legs, each leg connecting a scheduled departure station to a scheduled arrival station.

Booking the reservation may include checking the provider inventory for availability of the service, e.g., seat availability on the segments comprising the itinerary. This check may include sending a reservation request from the travel agency system 16 to the GDS 12. The GDS 12 may in turn query a corresponding provider system 14 for availability of the services comprising the electronic ticket. If the requested services are available, the services may be booked, and the provider inventory decreased to reflect the booking. In response to the traveler approving the transaction, the traveler's account may be billed for the price of the services.

In order for the service provider to be able to associate the electronic ticket with the traveler, some form of identification may be required. Identification may be based on official documents, such as a driver's license or passport. Basing identification of the traveler on official documents may provide a reasonably good level of security because this type of identification may be difficult to copy or abuse due to built in safeguards. However, using official documents to associate the traveler with the electronic ticket generally requires human intervention from an employee of the travel provider, such as a boarding agent, a desk agent, or a conductor. The traveler must also carry the official document at all times, even though they might not otherwise be required to do so.

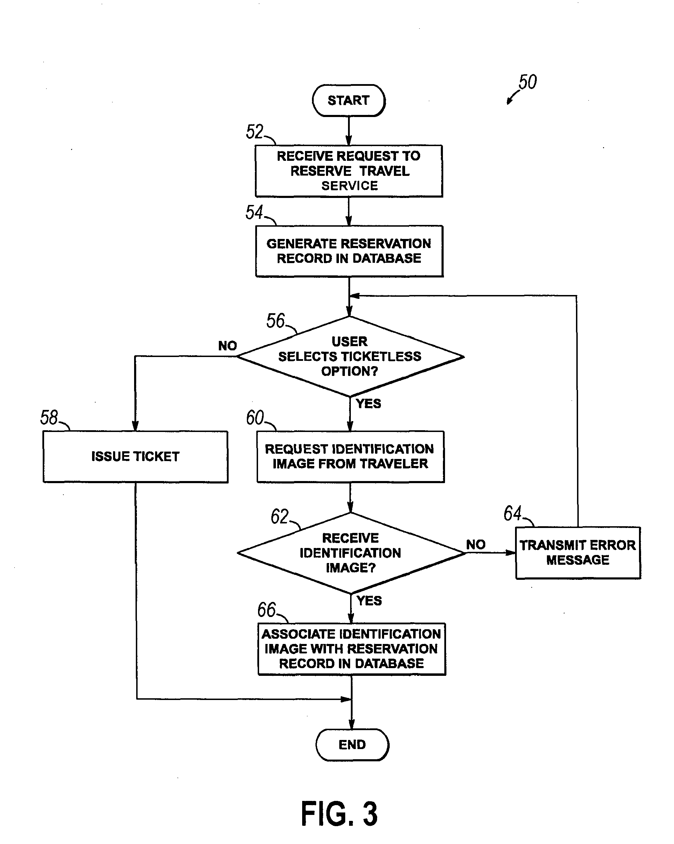

Referring now to FIG. 3, a flow chart is presented that depicts a process 50 which may be executed by a computer system, such as the GDS 12, to generate the electronic ticket. In block 52, the process 50 may receive a request to reserve a travel service, such as a flight, rail pass, hotel room, or rental car. The request may be received from the travel agency system 16 in response to input by a travel agent or interaction with the traveler system 18. In any case, in response to receiving the request, the process 50 may proceed to block 54 and generate one or more reservation records 23 in the electronic ticket database 20. The reservation records 23 may define the electronic ticket, and may include data identifying the segments and/or services of the trip itinerary and corresponding electronic ticket coupons, electronic ticket coupon status (e.g., used or unused), traveler information (e.g., name and address), PNR data, hotel or rental car reservations, or any other data necessary to define the electronic ticket. The process 50 may then proceed to block 56.

In block 56, the process 50 may receive data from the traveler indicting whether the traveler would like the electronic ticket to include the open ticketless feature. This data may be received, for example, in response to a query transmitted to the traveler system 18, or in response to the traveler activating a button on a web page displayed by the traveler system 18. In any case, if the traveler does not select the open ticketless feature option ("NO" branch of decision block 56), the process 50 may proceed to block 58.

In block 58, the process 50 may assign an identification code to the electronic ticket, and issue the electronic ticket. The identification code may be based on data specific to the electronic ticket (e.g., a PNR reference number or electronic ticket number), or data specific to the traveler (e.g., a loyalty card number, credit card number, or other number that identifies the traveler). In either case, the traveler may have to remember which type of identification code is associated with the electronic ticket. At the point-of-service, the traveler may be required to provide the identification code to a boarding agent or enter the identification code into a terminal. In some cases, the traveler may also request a paper ticket be issued, or print out the ticket, in which case the traveler may need to present the paper ticket at the point-of-service.

If the traveler indicates that they wish to use the open ticketless feature ("YES" branch of decision block 56), the process 50 may proceed to block 60. In block 60, the process 50 may request an identification image from the traveler. In response, the traveler may for example: (1) upload an image stored on the traveler system 18, (2) upload an image captured by the imaging device 44, or (3) select an image provided to the user by the process 50 (e.g., an image displayed on a web page used for booking the ticket). To this end, a front end application, such as a smart phone application or browser plug-in, may be installed on the traveler system 18 that facilities uploading the image from the traveler system 18. The image may be of a document, such as an identity card or passport of the traveler, a traveler head-shot, or any other scene, item, or pattern having sufficient complexity to allow the identification image to be used to positively associate the traveler with the electronic ticket.

In response to requesting the identification image, the process 50 may proceed to block 62 and determine if the identification image has been received. If the identification image has not been received ("NO" branch of decision block 62), the process 50 may proceed to block 64 and transmit an error message to the traveler before returning to block 56. By way of example, the process 50 might determine that the image was not received in response to an excessive amount of time passing without receiving the image. The process 50 may also determine the image was not received in response to receiving an image having characteristics that render the image unsuitable for associating the traveler with the electronic ticket. For example, an image lacking sufficient distinguishing details (e.g., an image of an empty sky), that is too common (e.g., an image of the Mona Lisa), or that violates a copyright may be rejected by the process 50.

In response to the receiving the image ("YES" branch of decision block 62), the process 50 may proceed to block 66. In block 66, the process 50 may associate the electronic ticket with the identification image in the electronic ticket database 20. This association may comprise storing the identification image in the electronic ticket database 20 and linking the stored image to the reservation records comprising the electronic ticket. In some cases, the identification image may contain sensitive and/or personal information. For example, the image could include an identity card having a personal identity number, a passport, or a credit card number. To address this potential security issue, the process 50 may encrypt the identification image before associating the image with the electronic ticket in the electronic ticket database 20. In embodiments that encrypt the identification image, the identification image may be stored in an encrypted state, thereby protecting any sensitive information that may be in the identification image. In certain jurisdictions, this encryption may be required in order to ensure compliance with privacy regulations.

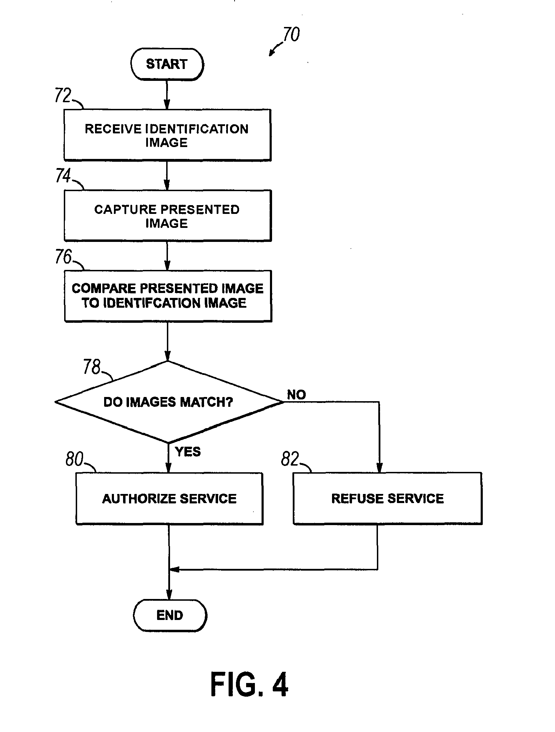

Referring now to FIG. 4, a flow chart is presented that depicts a process 70 which may be executed by a computer system, such as the control system 19, to determine if the traveler is entitled to receive the services reserved by the electronic ticket. In block 72, the process 70 may receive the identification image from the electronic ticket database 20. The identification image may be received as part of a transmission that includes the reservation records comprising the electronic ticket, the Total Travel Record, or any other suitable data file. The identification image may be transmitted or otherwise retrieved from the electronic ticket database 20 in response to the electronic ticket entering a check-in window, and may be received in encrypted form. The check-in window may be configured to provide a desired lead time before the service is to be provided so that the process 70 is properly configured to determine whether the traveler is entitled to receive the ticketed service.

In block 74, the process 70 may capture an image presented by the traveler, or a "presented image". The presented image may be captured at the point-of-service. For example, the traveler may present the image before boarding the conveyance, checking into the hotel, or picking up the rental car, by producing a smart phone or other computing device that displays the presented image, or by presenting a printout of the presented image. An employee of the travel service provider may then scan or otherwise capture the presented image using a suitable computing device, such as a personal digital assistant.

The control process may then proceed to block 76 and compare the presented image to the identification image received from the electronic ticket database 20. To this end, the computing device used by the employee may be in communication with the control system 19 so that the captured image can be transmitted to the control system 19 for comparison. In an alternative embodiment of the invention, the process 70 may be executed on the computing device of the employee. That is, the computing device of the employee may comprise at least a portion of the control system 19, in which case the captured image could be compared to the identification image in the computing device of the employee. In either case, the process 70 may encrypt the captured image using the same encryption algorithm that was used to encrypt the identification image in the electronic ticket database before comparing the images. That is, an encrypted version of the captured image may be compared to the encrypted version of the identification image.

If the images match ("YES" branch of decision block 78), the process 70 may proceed to block 80 and authorize the travel service provider to provide the ticketed service. That is, the process 70 may provide an indication to the employee that the traveler is authorized to use the reservation defined by the electronic ticket. The traveler may then receive the service, for example, by boarding the conveyance, receiving access to the hotel room, or a key to the rental car, as the case may be. In an embodiment of the invention, the traveler may receive the travel service directly in response to the images matching. For example, a scanning device on a door of the reserved hotel room could open the door automatically in response to the captured image matching the identification image.

In response to the images not matching ("NO" branch of decision block 78), the process 70 may proceed to block 82 and provide an indication to the employee that the ticketed service should be refused. In the event that the ticketed service is refused, the traveler may be asked to provide an alternative form of identification in order to determine if the refusal was due to a mistake by the traveler, a system fault, or some other correctable error.

The program code embodying any of the embodiments of the invention described herein is capable of being individually or collectively distributed as a program product in a variety of different forms. In particular, the program code may be distributed using a computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The methods described herein can be implemented by computer program instructions supplied to the processor of any type of computer to produce a machine with a processor that executes the instructions to implement the functions/acts specified herein. These computer program instructions may also be stored in a computer readable medium that can direct a computer to function in a particular manner. To that end, the computer program instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified and/or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), and/or across one or more hardware platforms, it should be appreciated that the invention is not limited to the specific organization and allocation of program functionality described herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

The methodologies presented herein also feature the following points.
1. A method of authorizing use of a reservation for a travel service by a traveler, the method comprising:
   receiving, at a first computer, a first image presented by the traveler;
   comparing, by one of the first computer or a second computer, the first image to a second image associated with the reservation for the travel service; and
   in response to the first image matching the second image, authorizing the traveler to use the reservation.
2. The method of point 1 further comprising:
   receiving, at the first computer, the second image from the second computer, the second image being associated with the reservation in a database operatively coupled to the second computer,
   wherein the first computer compares the first image to the second image.
3. The method of point 1 further comprising:
   transmitting the first image from the first computer to the second computer, the second image being associated with the reservation in a database operatively coupled to the second computer,
   wherein the second computer compares the first image to the second image.
4. The method of any of points 1 to 3 wherein receiving the first image comprises:
   scanning a physical image with an imaging device operatively coupled to the first computer; and
   saving an output of the imaging device in a memory of the first computer as the first image.
5. The method of point 4 wherein the physical image is an image displayed by an electronic device or a printed image.
6. An apparatus for authorizing use of a reservation for a travel service by a traveler, the apparatus comprising:
   one or more processors; and
   a memory including instructions that, when executed by the one or more processors, cause the apparatus to:
      receive a first image presented by the traveler;
      compare the first image to a second image associated with the reservation for the travel service; and
      in response to the first image matching the second image, authorize the traveler to use the reservation.
7. The apparatus of point 6 wherein the instructions further cause the apparatus to perform the methods of any of points 2 to 5.
8. A computer program product comprising:
   a non-transitory computer readable storage medium; and
   instructions stored on the non-transitory computer readable storage medium that, when executed by a processor, cause the processor to:
   receive a first image presented by a traveler;
   compare the first image to a second image associated with a reservation for a travel service; and
   in response to the first image matching the second image, authorize the traveler to use the reservation.
9. The computer program product of point 8 wherein the instructions further cause the processor to perform the methods of any of point 2 to 5.

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicant's general inventive concept.

## Claims

1. A method of associating a traveler with a reservation for a travel service, the method comprising:
receiving, at a first computer, a request to reserve the travel service;
generating a reservation record for the travel service in a database operatively coupled to the first computer;
receiving, at the first computer, a traveler-defined first image; and
associating the first image with the reservation record in the database.

2. The method of claim 1 further comprising:
in response to receiving the request to reserve the travel service, transmitting a query from the first computer to a second computer, the query requesting the first image.

3. The method of claim 2 wherein the first image is received from the second computer in response to the query.

4. The method of claim 1 further comprising:
capturing a second image presented by the traveler at a point-of-service;
receiving the second image at the first computer or a second computer;
comparing, by the first computer or the second computer, the second image to the first image; and
if a result of the comparison is that the second image matches the first image, authorizing the traveler to use the reservation.

5. The method of claim 4 further comprising:
transmitting the first image from the first computer to the second computer,
wherein the second computer compares the second image to the first image.

6. The method of claim 4 or claim 5 further comprising:
determining an amount of time remaining before a scheduled use of the reservation,
wherein the first image is transmitted from the first computer to the second computer in response to the amount of time being less than a predetermined amount of time.

7. The method of any of claims 4 to 6 wherein the second computer is operated by a provider of the travel service, and capturing the second image comprises scanning the second image presented by the traveler at the point-of-service.

8. The method of any of claims 4 to 7 wherein the second image presented by the traveler is an image displayed by an electronic device or a printed image.

9. The method of any of the preceding claims further comprising:
in response to receiving the first image at the first computer, encrypting the first image that is associated with the reservation record in the database.

10. An apparatus for associating a traveler with a reservation stored in a database, the apparatus comprising:
one or more processors; and
a memory including instructions that, when executed by the one or more processors, cause the apparatus to:
receive a request to reserve a travel service;
generate a reservation record for the travel service in the database;
receive a traveler-defined first image; and
associate the first image with the reservation record in the database.

11. The apparatus of claim 10 wherein the instructions further cause the apparatus to perform the methods of any of claims 2 to 9.

12. A computer program product comprising:
a non-transitory computer readable storage medium; and
instructions stored on the non-transitory computer readable storage medium that, when executed by a processor, cause the processor to:
receive a request to reserve a travel service;
generate a reservation record for the travel service in a database operatively coupled to the processor;
receive a traveler-defined first image; and
associate the first image with the reservation record in the database.

13. The computer program product of claim 12 wherein the instructions further cause the processor to perform the methods of any of claims 2 to 9.
